(19) Europäisches Patentamt
European Patent Office
Office européen des brevets

(11) EP 2 361 267 B1

(12) **EUROPEAN PATENT SPECIFICATION**

(45) Date of publication and mention of the grant of the patent:
**04.03.2015 Bulletin 2015/10**

(21) Application number: **09745067.0**

(22) Date of filing: **05.11.2009**

(51) Int Cl.:
***C08F 4/00*** (2006.01)
***B01J 31/16*** (2006.01)
***B01J 31/22*** (2006.01)
***B01J 31/12*** (2006.01)
***B01J 31/14*** (2006.01)

(86) International application number:
**PCT/EP2009/064666**

(87) International publication number:
**WO 2010/052260 (14.05.2010 Gazette 2010/19)**

(54) **PROCESS TO PREPARE A SOLID CATALYST COMPOSITION**

PROZESS ZUR HERSTELLUNG EINER FESTEN KATALYSATORZUSAMMENSETZUNG

METHODE POUR LA PREPRATION D'UN COMPOSITION DE CATALYSEUR SOLIDE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.11.2008 EP 08168616**

(43) Date of publication of application:
**31.08.2011 Bulletin 2011/35**

(73) Proprietor: **Borealis AG**
**1220 Vienna (AT)**

(72) Inventors:
- **HAKALA, Kimmo**
**FIN-00100 Helsinki (FI)**
- **MANSNER, Erik**
**FIN-00100 Helsinki (FI)**
- **HÄTÖNEN, Jari**
**FIN-06100 Porvoo (FI)**
- **HUHTANEN, Lauri**
**FIN-07940 Loviisa (FI)**
- **TUOMINEN, Olli**
**FIN-00930 Helsinki (FI)**
- **AUMO, Jeanette**
**FIN-06400 Porvoo (FI)**
- **LEHTINIEMI, Ismo**
**FIN-04500 Kellokoski (FI)**

(74) Representative: **Lux, Berthold**
**Maiwald Patentanwalts GmbH**
**Elisenhof**
**Elisenstraße 3**
**80335 München (DE)**

(56) References cited:
**EP-A- 0 519 236**
**EP-A- 1 847 551**
**US-B1- 6 383 969**

- **DATABASE WPI Week 200120 Thomson Scientific, London, GB; AN 2001-194665 XP002513438 & JP 2001 011112 A (MITSUI CHEM INC) 16 January 2001 (2001-01-16)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a new solid catalyst composition as well to its manufacture and use.

It is well known that the huge variety of different polymer types is achieved by specific tailored processes. Such different processes have typically different variables and parameters, including different monomer(s), solvents, additives, reaction conditions, catalyst systems, and the like. The properties and characteristics of the final products are quite often dependent on the components used in the process and on the parameters of the process that are selected, and it has been recognized that small modifications in such variables and parameters can create significant differences in not only the final product, e.g. polymer properties, but also in the effectiveness and operability of the overall process, and the catalyst productivity.

As a general matter the catalyst productivity should be as high as possible. Further to achieve high out-put rates the bulk density and flowability of the produced polymer should be high.

Nowadays, a slurry reactor is a type of reactor which is frequently used in polymerisation processes either alone or in combination with additional reactors, like other slurry reactors or gas phase reactors. The reaction medium in a slurry reactor is either a saturated light hydrocarbon (especially for the manufacture of polyethylene) or liquid monomer, like propylene (for the manufacture of polypropylene). Furthermore, heterogeneous catalyst systems are commonly used in such processes to avoid the drawbacks of the homogeneous processes, like reactor fouling caused by the obtained polymers with low bulk density (fluffy material).

Heterogeneous catalyst systems, single site or Ziegler-Natta type, are normally used in olefin polymerisation processes. Conventional heterogeneous catalysts are solid catalyst systems, where catalyst components are supported or loaded onto catalytically inert carrier material, such as organic and inorganic support materials, like silica, $MgCl_2$ or porous polymeric material. Silica is the mostly used as carrier material with single site, e.g. metallocene type catalysts. However, there are problems which result from the use of supported catalyst systems. For instance, it is difficult to get an even distribution of the catalyst components in the porous carrier material; and leaching of the catalyst components from the support can occur. Such drawbacks lead to unsatisfactory polymerisation behaviour of the catalyst, and, as a result, the morphology of the polymer product thus obtained is also poor. Furthermore, such classic heterogeneous catalyst systems show reduced catalyst activity which is of course detrimental as the catalyst amount must be increased which in turn leads to polymer products contaminated with rather high amounts of catalyst residues.

To avoid the contamination of the polymer products with catalytic residues new catalyst systems have been developed being self-supported, i.e. being not in need of catalytically inert support material, and being further featured by a low porosity and low surface area. Such new catalyst systems enable in principle to increase the output rate of polymer processes since the bulk density of the polymerized product can be increased. For the first time such new metallocene catalyst systems have been for instance described in WO 03/051934. However these new self-supported catalyst systems have the drawback that they tend to dissolve to some extent in the polymerisation medium needed in the slurry reactors and thus the outstanding morphology of the self-supported catalyst systems is reduced. Further it must be considered that the self-supported catalyst systems generates-due to the high amount of catalytically active species in the catalyst system - at the beginning of the polymerization high temperatures what cause a melting of the produced material. Both effects, i.e. the partial dissolving of the catalyst system and the heat generation, cause fouling and sheeting in the reactors.

Thus there is the need to develop new catalyst system which show the good properties of self-supported catalyst systems and which can be effectively applied in polymerization processes for ethylene and propylene, especially in processes, where at least one polymerisation step is carried out in slurry phase.

Thus the object of the present invention is to provide a new catalyst composition which enables high polymerisation productivity in terms of high polymer out-put and which avoids fouling and/or sheeting in the reactor system. A further object is that the catalyst composition shall show an excellent catalytic activity and being able to keep it's excellent morphology in the process, e.g. being not soluble to any extent in the polymerization medium, for instance in the polymerization reaction medium of a slurry reactor.

The finding of the present invention is that the catalyst system must show a low porosity and must enable that its catalytically active species are protected against the polymerization medium in a slurry reactor. A further finding is that the catalytically active species are dispersed in the protecting material.

Accordingly the present disclosure is directed to a solid catalyst composition comprising a polymer matrix (A) and distributed therein a solid catalyst system (B), wherein

(a) the solid catalyst system (B)

(i) has a porosity measured according to ASTM 4641 of less than 1.40 ml/g,
(ii) comprises

(α) a transition metal compound of formula (I)

$$L_mR_nMX_q \qquad (I)$$

wherein

"M" is a transition metal of anyone of the groups 3 to 10 of the periodic table (IUPAC),
each "X" is independently a monovalent anionic σ-ligand,
each "L" is independently an organic ligand which coordinates to the transition metal (M),
"R" is a bridging group linking two organic ligands (L),
preferably said organic ligands (L) and said bridging groups (R) do not comprise polymerizable olefinic groups,
"m" is 2 or 3,
"n" is 0, 1 or 2,
"q" is 1,2 or 3,
m+q is equal to the valency of the transition metal (M),

and
(β) a cocatalyst (Co) comprising a compound of Al,

and
(b) the mol ratio of Al of the cocatalyst (Co) and the transition metal "M" of the transition metal compound [Al/M] is from 100 to 800 mol/mol.

Preferably the polymer matrix (A) is not covalent bonded to anyone of the organic ligands (L) and/or to anyone of the bridging groups (R) of the transition metal compound as defined in the instant invention. The weight ratio of the polymer matrix (A) and the catalyst system (B) [weight polymer matrix (A)/weight catalyst system (B)] in the solid catalyst composition is from 1.0 to 6.0. The solid catalyst composition according to this invention is obtained, by polymerzing at least one olefin monomer in the presence of the catalyst system (B) being in a solid form.

In a first alternative of the present disclosure the solid catalyst composition comprising a polymer matrix (A) and distributed therein a solid catalyst system (B) is further characterized in that

(a) the solid catalyst system (B)

(i) has a porosity measured according to ASTM 4641 of less than 1.40 ml/g,
(ii) comprises

(α) a transition metal compound of formula (I)

$$L_mR_nMX_q \qquad (I)$$

wherein

"M" is a transition metal of anyone of the groups 3 to 10 of the periodic table (IUPAC),
each "X" is independently a monovalent anionic σ-ligand,
each "L" is independently an organic ligand which coordinates to the transition metal (M),
"R" is a bridging group linking two organic ligands (L),
preferably said organic ligands (L) and the bridging groups (R) do not comprise polymerizable olefinic groups,
"m" is 2 or 3,
"n" is 0, 1 or 2,
"q" is 1, 2 or 3,
m+q is equal to the valency of the transition metal (M),

and
(β) a cocatalyst (Co) comprising a compound of Al,

and

(b) the weight ratio of the polymer matrix (A) and the catalyst system (B) [weight polymer matrix (A)/weight catalyst system (B)] in the solid catalyst composition is from 1.0 to 6.0.

Preferably the first alternative is further specified that the polymer matrix (A) is not covalent bonded to anyone of the organic ligands (L) and/or to anyone of the bridging groups (R) of the transition metal compound as defined in the instant invention. Additionally it is appreciated that the mol ratio of Al of the cocatalyst (Co) and the transition metal "M" of the transition metal compound [Al/M] is from 100 to 800 mol/mol. The solid catalyst composition is obtained, by polymerizing at least one olefin monomer in the presence of the catalyst system (B) being in a solid form.

In a second alternative of the present disclosure the solid catalyst composition comprising a polymer matrix (A) and distributed therein a solid catalyst system (B) is further characterized in that

(a) the solid catalyst system (B)

(i) has optionally a porosity measured according to ASTM 4641 of less than 1.40 ml/g,
(ii) comprises

($\alpha$) a transition metal compound of formula (I)

$$L_mR_nMX_q \qquad (I)$$

wherein

"M" is a transition metal of anyone of the groups 3 to 10 of the periodic table (IUPAC),
each "X" is independently a monovalent anionic $\sigma$-ligand,
each "L" is independently an organic ligand which coordinates to the transition metal (M),
"R" is a bridging group linking two organic ligands (L),
preferably said organic ligands (L) and the bridging groups (R) do not comprise polymerizable olefinic groups,
"m" is 2 or 3,
"n" is 0, 1 or 2,
"q" is 1, 2 or 3,
m+q is equal to the valency of the transition metal (M),

and
($\beta$) a cocatalyst (Co) comprising a compound of Al,

and
(b) the polymer matrix (A) is not covalent bonded to anyone of the organic ligands (L) and/or to anyone of the bridging groups (R) of the transition metal compound,
and
(c) further

(i) the weight ratio of the polymer matrix (A) and the catalyst system (B) [weight polymer matrix (A)/weight catalyst system (B)] in the solid catalyst composition is from 1.0 to 6.0 and/or
(ii) the mol ratio of A1 of the cocatalyst (Co) and the transition metal "M" of the transition metal compound [Al/M] is from 100 to 800 mol/mol.

The solid catalyst composition of the second alternative is obtained, by polymerzing at least one olefin monomer in the presence of the catalyst system (B) being in a solid form.

Surprisingly it has been found out that with each of the above defined solid catalyst compositions improvements in the process operability can be achieved. In particular it can be avoided that the catalytic active species are dissolved in the polymerization medium of the slurry reactor. Accordingly the morphology of the catalyst system within the new catalyst composition remains good during the polymerisation process which guaranties a high bulk density and flowability of the thus produced polymer due to the replica effect. It has been shown that in case the catalyst system is featured by a low porosity and/or low surface area also the produced polymer material show comparable properties, i.e. having no or only few pores on the polymer surface and thus having a rather low surface area. Further also the excessive heat generation at the beginning of the polymerization of the known neat self-supported catalyst systems is drastically reduced with the new catalyst composition which further contributes to the good end product properties of the polymeric material

by avoiding agglomeration and fluffy polymer material formation and sheeting of material at the reactor walls or transport lines. Accordingly with the new solid catalyst composition a fouling and sheeting in the overall reactor system is avoided which is a clear improvement compared to the case with known neat self-supported catalyst systems or also known supported catalyst systems.

The new solid catalyst compositions as defined above are in particular featured by the use of self-supported catalyst systems, which have been dispersed into polymeric matrix material. Thereby the catalyst system (B) is distributed within the polymer matrix. The term "distributed" shall preferably indicate that the catalyst system (B) is not concentrated at one place within the matrix (A) but (evenly) dispersed within the matrix (A). This has the advantage that - contrary to commercially available supported catalyst systems -an overheating at the beginning of the polymerization process due to "hot spots" areas caused by concentration of catalytic species at one place is diminished which in turn supports a start of the polymerization in a controlled way under mild conditions. The even distribution of catalyst system in polymer matrix is mainly achieved due to the manufacture of the inventive solid catalyst composition as described in detail below. One remarkable feature of the process defined in detail below is that the inventive catalyst composition is obtained by heterogeneous catalysis, i.e. the catalyst system (B) is in solid form when polymerizing at least one olefin monomer, preferably at least one $\alpha$-olefin monomer, to the matrix (A) in which then the catalyst system (B) is dispersed. Thus the inventive catalyst composition is obtainable, preferably obtained, by heterogeneous catalysis using the solid catalyst system (B) as defined in the instant invention.

A further important requirement of the solid catalyst composition according to the present disclosure is that the catalyst system (B), i.e. the catalytic active species within the solid catalyst composition, is protected against dissolution phenomena in a slurry reactor, i.e. in low molar mass hydrocarbons, like propane, i-butane, pentane, hexane or propylene. On the other hand the protection of the catalyst system should be not too massive otherwise the catalytic activity of the active species might be deteriorated. In the present invention the conflicting interests one the one hand of high catalytic activity of the catalyst system and on the other hand of the solid stability of the catalyst system in the polymerization medium of the slurry reactor is achieved by protecting the catalyst system (B) by a matrix (A) wherein the matrix (A) is present in rather low amounts within the solid catalyst composition. It has been surprisingly found out that a rather low weight ratio of polymer matrix (A) to catalyst system (B) [weight polymer matrix (A)/weight catalyst system (B)], leads to a satisfactory protection against dissolution by keeping the catalyst activity on high levels. Accordingly it is appreciated that the weight ratio of the solid composition [weight polymer matrix (A)/weight catalyst composition (B)] is below 25.0, more preferably below 15.0, yet more preferably below 10.0, still yet more preferably below 5.0. On the other hand to achieve a reasonable protection against dissolution the polymerization degree shall preferably exceed a value of 0.5, more preferably of 0.7, yet more preferably of 1.0. Preferred ranges of the polymerization degree shall be 0.7 to 10.0, more preferably 1.0 to 8.0, yet more preferably 1.0 to 6.0, still more preferably 1.0 to 5.0, still yet more preferably of 2.0 to 5.0.

Alternatively and/or additionally the mol ratio of Al of the cocatalyst (Co) and the transition metal "M" of the transition metal compound shall be preferably kept in a specific ratio. Accordingly it is appreciated that the mol ratio of Al of the cocatalyst (Co) and the transition metal "M" of the transition metal compound [Al/M] is in a range of 100 to 800 mol/mol, more preferably in a range of 150 to 600 mol/mol, yet more preferably in a range of 200 to 400 mol/mol.

The polymer matrix (A) can be any type of polymer as long as it prevents the dissolution of the catalyst system (B) in the polymerization medium of a slurry reactor, i.e. low molar mass hydrocarbons, like propane, i-butane, pentane, hexane or propylene, and is catalytically inert. Accordingly the polymer matrix (A) is preferably based on olefin monomers, like $\alpha$-olefin monomers, each having 2 to 20 carbon atoms. The olefin, like $\alpha$-olefin, can be linear or branched, cyclic or acyclic, aromatic or aliphatic. Preferred examples are ethylene, propylene, 1-butene, 1-pentene, 2-methyl-1-butene, 3-methyl-1-butene, 1-hexene, 2-methyl-1-pentene, 3-methyl-1-pentene, 4-methyl-1-pentene, 2-ethyl-1-butene, 2,3-dimethyl-1-butene, 1-octene, styrene, and vinylcyclohexane.

It is in particular preferred that the polymer matrix (A) corresponds to the polymer which shall be produced with the inventive solid catalyst composition. Accordingly it is preferred that the polymer matrix (A) is preferably a polymer selected from the group consisting of ethylene homopolymer, ethylene copolymer, propylene homopolymer and propylene copolymer.

Further it is appreciated that the weight average molecular weight ($M_w$) of the polymer matrix (A) is rather low. Thus it is preferred that the polymer matrix (A) has weight average molecular weight ($M_w$) of below or equal 300,000 g/mol, more preferably below 50,000 g/mol. In preferred embodiments the weight average molecular weight ($M_w$) of the polymer matrix (A) is in the range of 3,000 to 30,000 g/mol, more preferably in the range of 5,000 to 20,000 g/mol.

Moreover it is appreciated that the solid catalyst composition of the instant invention comprising the polymer matrix (A) and dispersed therein the catalyst system (B) has preferably a reduced porosity. Accordingly particles of the solid catalyst composition have preferably a low surface area, i.e. the surface of the particles of the catalyst composition are essentially free of pores penetrating into the interior of said particles. Such a plain surface of the catalyst particles is desirable as it positively contributes to the end properties of the polymerized material. Therefore it is preferred that the particles of the catalyst composition have a rather low porosity, i.e. a porosity measured according to ASTM 4641

of less than 1.4 ml/g, preferably of less than 1.0 ml/g, more preferably of less than 0.5 ml/g, still more preferably of less than 0.3 ml/g. In another preferred embodiment the porosity is not detectable when determined with the method applied according to ASTM 4641.

A further requirement of the present disclosure is that the solid catalyst composition must comprise a specific catalyst system (B). As stated in the introductory part of this invention the properties of the produced polymers are dependent on many factors. One essential requirement is the type of catalyst. For instance Ziegler-Natta catalysts tend to produce polymer material with a rather broad molecular weight distribution whereas metallocene catalysts enable the manufacture of polymers with a narrow molecular length distribution. In the present invention catalysts are intended to be used which belong not to the group of Ziegler-Natta catalysts but to the group which render possible a production of polymers with a rather narrow molecular weight distribution. Examples of such catalyst types are metallocenes, scorpionate compounds and non-metallocenes.

Further it is appreciated that such type of catalyst systems are self-supported, i.e. they are solid, but do not comprise catalytically inert external carrier material, such as organic and inorganic support materials, like silica, $MgCl_2$ or porous polymeric carrier material.

However as outlined above these types of catalysts systems tend to dissolve in the polymerization medium of slurry reactors as indicated above which is detrimental. Nevertheless to be able to produce specific polymers, as for instance polyethylene and isotactic polypropylene, with high bulk density and narrow molecular weight distribution the use of non-Ziegler-Natta catalyst systems being preferably self -supported are essential. Thus the solid catalyst composition must comprise a solid catalyst system (B), said solid catalyst system (B) comprising, preferably consisting to 60 wt.-% of, more preferably consisting to 85 wt.-% of, yet more preferably consisting to 95 wt.-% of, yet still more preferably consisting of,

(i) a transition metal compound of formula (I)

$$L_mR_nMX_q \qquad (I)$$

wherein

"M" is a transition metal of anyone of the groups 3 to 10 of the periodic table (IUPAC), preferably a transition metal of anyone of the groups 4 to 6 of the periodic table (IUPAC), more preferably titanium (Ti), zirconium (Zr) or hafnium (Hf), i.e. zirconium (Zr) or hafnium (Hf),
each "X" is independently a monovalent anionic σ-ligand,
each "L" is independently an organic ligand which coordinates to the transition metal (M),
"R" is a bridging group linking two organic ligands (L),
preferably said organic ligands (L) and the bridging groups (R) do not comprise polymerizable olefinic groups,
"m" is 2 or 3,
"n" is 0, 1 or 2,
"q" is i, 2 or 3,
m+q is equal to the valency of the transition metal (M),

and
(ii) a cocatalyst (Co) comprising, preferably consisting of, a compound of Al.

The catalyst system (B) according to this disclosure may comprise small amounts of other organic or inorganic material not being a transition metal compound of formula (I) and a cocatalyst (Co) as defined in the instant invention. In such a case the transition metal compound of formula (I) and the cocatalyst (Co) constitute at least 60 wt.-% of the catalyst system (B) and the additionally organic or inorganic material, preferably organic material, at most 40 wt.-% of the catalyst system (B). Preferably the transition metal compound of formula (I) and the cocatalyst (Co) constitute at least 85 wt-%, more preferably at least 90 wt-%, still more preferably at least 95 wt-% of the catalyst system (B). In the most preferred case the transition metal compound of formula (I) and the cocatalyst (Co) constitute 100 wt-% of the catalyst system (B). Thus, the catalyst system (B) contains at most 15 wt-% of additional material, more preferably at most 10 wt-%, still more preferably at most 5 wt-%, such as 0 to 10 wt-%, or 0 to 5 wt-% of additional material. As example, catalyst system (B) may comprise in addition to the Al compound cocatalyst, other cocatalysts of compounds of Group 13 of the Periodic table (IUPAC), like boron compounds.

The organic ligands (L) and/or the bridging groups (R) can be any kind of residues of the transition metal compound as defined in the instant invention. However it is in particular preferred that the organic ligands (L) and/or the bridging groups (R) do not comprise a polymerizable residue. A polymerizable residue according to this invention is any functional group which enables the covalent bonding of the transition metal compound via the organic ligands (L) and/or

the bridging groups (R) with the polymer matrix (A). Accordingly it is in particular preferred that the organic ligands (L) and/or the bridging groups (R) of the transition metal compound as defined in the instant invention do not comprise polymerizable olefinic groups, like olefinically unsaturated substituents. Examples of such polymerizable olefinic groups are substituents having the formula (IV)

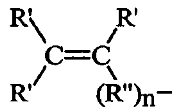

wherein

R" is a hydrocarbyl diradical having 1 to 20 carbon atoms; more preferably 2 to 10,
n is 1 or 0, and
each R' is individually selected from the group consisting of organo radicals having 1 to 10 carbon atoms and hydrogen.

Most preferably R" has at least two carbons in its main alkylene chain, i.e. it is a divalent ethylene radical or a higher homolog thereof.
Accordingly it is in particular preferred that the organic ligands (L) and/or the bridging groups (R) do not comprise polymerizable olefinic groups having the formula (IV).
As a consequence of the previous paragraph it is preferred that the polymer matrix (A) is not covalent bonded to the transition metal compound of formula (I) via the organic ligands (L) and/or the bridging groups (R).
In a more preferred definition, each organic ligand (L) is independently

(a) a substituted or unsubstituted cycloalkyldiene, preferably a cycloalkyldiene selected from the group consisting of unsubstituted cyclopentadiene, substituted cyclopentadiene, monofused derivative of a cyclopentadiene, bifused derivative of a cyclopentadiene and multifused derivative of a cyclopentadiene, or
(b) an acyclic $\eta^{-1}$, an acyclic $\eta^2$-, an acyclic $\eta^3$-, an acyclic $\eta^4$- or an acyclic $\eta^6$-ligand composed of atoms from Groups 13 to 16 of the periodic table (IUPAC), preferably an acyclic $\eta^1$-, an acyclic $\eta^2$-, an acyclic $\eta^3$-, an acyclic $\eta^4$- or an acyclic $\eta^6$-ligand composed of atoms from Groups 13 to 16 of the periodic table (IUPAC) in which the open chain ligand may be fused with one or two, preferably two, aromatic or non-aromatic rings and/or bear further substituents, or
(c) a cyclic $\sigma$-, cyclic $\eta^1$-, a cyclic $\eta^2$-, a cyclic $\eta^3$-, a cyclic $\eta^4$- or a acyclic $\eta^6$-, mono-, bi- or multidentate ligand composed of unsubstituted or substituted mono-, bi- or multicyclic ring systems selected from aromatic or non-aromatic or partially saturated ring systems and containing carbon ring atoms.

More preferably at least one of the organic ligands (L), preferably both organic ligands (L), is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.
Further in case the organic ligands (L) are substituted it is preferred that at least one organic lignad (L), preferably both organic ligands (L), comprise(s)

(a) one or more residues independently selected from the group consisting of halogen, C1 to C10 alkyl, C2 to C20 alkenyl, C2 to C20 alkinyl, C3 to C12 cycloalkyl, C6 to C20 aryl, C7 to C20-arylalkyl, C3 to C12 cycloalkyl which contains 1, 2, 3 or 4 heteroatom(s) in the ring moiety, C6 to C20 heteroaryl and C1 to C20 haloalkyl,
or more preferably
(b) one or more residues independently selected from the group consisting of halogen, C1 to C10 alkyl, C3 to C12 cycloalkyl, C6 to C20 aryl, C7 to C20-arylalkyl, C3 to C12 cycloalkyl which contains 1, 2, 3 or 4 heteroatom(s) in the ring moiety, C6 to C20 heteroaryl and C1 to C20 haloalkyl.

By "$\sigma$-ligand" is meant throughout the invention a group bonded to the transition metal (M) at one or more places via a sigma bond.
Further the ligands (X) are preferably independently selected from the group consisting of hydrogen, halogen, C1 to C20 alkyl, C1 to C20 alkoxy, C2 to C20 alkenyl, C2 to C20 alkynyl,C3 to C12 cycloalkyl, C6 to C20 aryl, C6 to C20 aryloxy, C7 to C20 arylalkyl, C7 to C20 arylalkenyl, -SR", -PR"$_3$, -SiR"$_3$, -OSiR"$_3$ and -NR"$_2$, wherein each R" is independently hydrogen, C1 to C20 alkyl, C2 to C20 alkenyl, C2 to C20 alkynyl, C3 to C12 cycloalkyl or C6 to C20 aryl.

Additionally the bridging group (R) may a bridge of 1 to 7 atoms length, preferably with at least one heteroatom. It is in particular appreciated that the bridging group(s) (R) has(have) the formula (III)

$$-Y(R')_2- \qquad (III)$$

wherein

Y is carbon (C), silicon (Si) or germanium (Ge), and
R' is $C_1$ to $C_{20}$ alkyl, $C_6$ to $C_{12}$ aryl, $C_7$ to $C_{12}$ arylalkyl, or trimethylsilyl.

According to a preferred embodiment said transition metal compound of formula (I) is a group of compounds known as metallocenes. Said metallocenes bear at least one organic ligand, generally 1, 2 or 3, e.g. 1 or 2, which is η-bonded to the metal, e.g. a $\eta^2$ - to $\eta^6$-ligand, such as a $\eta^5$-ligand.

Preferably, a metallocene according to this invention is a transition metal of anyone of the groups 4 to 6 of the periodic table (IUPAC), suitably titanocene, zirconocene or hafnocene, which contains at least one $\eta^5$-ligand, which is an optionally substituted cyclopentadienyl, an optionally substituted indenyl, an optionally substituted tetrahydroindenyl or an optionally substituted fluorenyl. Thus the transition metal compound has preferably the formula (II)

$$(Cp)_2R_nMX_2 \qquad (II)$$

wherein

"M" is zirconium (Zr), hafnium (Hf), or titanium (Ti), preferably zirconium (Zr) or hafnium (Hf),
each "X" is independently a monovalent anionic σ-ligand, preferably selected from the group consisting of hydrogen, halogen, C1 to C20 alkyl, C1 to C20 alkoxy, C2 to C20
alkenyl, C2 to C20 alkynyl,C3 to C12 cycloalkyl, C6 to C20 aryl, C6 to C20 aryloxy, C7 to C20 arylalkyl, C7 to C20 arylalkenyl, -SR", $-PR''_3$, $-SiR''_3$, $-OSiR''_3$ and $-NR''_2$, wherein each R" is independently hydrogen, C1 to C20 alkyl, C2 to C20 alkenyl, C2 to C20 alkynyl, C3 to C12 cycloalkyl or C6 to C20 aryl,
each "Cp" is independently an unsaturated organic cyclic ligand which coordinates to the transition metal (M),
"R" is a bridging group linking two organic ligands (L),
"n" is 0 or 1, and
at least one "Cp"-ligand, preferably both "Cp"-ligands, is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

The substituted Cp-ligand(s) may have one or more substituent(s) being selected form the group consisting of halogen, hydrocarbyl (e.g. C1 to C20-alkyl, C2 to C20-alkenyl, C2 to C20-alkinyl, C3 to C12-cycloalkyl, C6 to C20-aryl or C7 to C20-arylalkyl), C3 to C12-cycloalkyl which contains 1, 2, 3 or 4 heteroatom(s) in the ring moiety, C6 to C20-heteroaryl, C1 to C20-haloalkyl, $-SiR''_3$, -SR", $-PR''_2$ or $-NR''_2$, each R" is independently a hydrogen or hydrocarbyl (e. g.C1 to C20-alkyl, C2 to C20-alkenyl, C2 to C20-alkinyl, C3 to C12-cycloalkyl or C6 to C20-aryl) or e. g. in case of $NR''_3$, the two substituents R" can form a ring, e.g. five-or six-membered ring, together with the nitrogen atom wherein they are attached to.

Further "R" of formula (II) is preferably a bridge of 1 to 7 atoms, e. g. a bridge of 1 to 4 C-atoms and 0 to 4 heteroatoms, wherein the heteroatom(s) can be e.g. silicon (Si), germanium (Ge) and/or oxygen (O) atom(s), whereby each of the bridge atoms may bear independently substituents, such as C1 to C20-alkyl, tri(C1 to C20-alkyl)silyl, tri(C1 to C20-alkyl)siloxy or C6 to C20-aryl substituents); or a bridge of 1 to 3, e.g. one or two, hetero atoms, such as silicon (Si), germanium (Ge) and/or oxygen (O) atom(s), e.g. $-SiR^1_2-$, wherein each $R^1$ is independently C1 to C20-allcyl, C6 to C20-aryl or tri(C1 to C20-alkyl)silyl- residue, such as trimethylsilyl-.

The "Cp"-ligand of formula (II) is preferably cyclopentadienyl, indenyl, tetrahydroindenyl or fluorenyl, optionally substituted as defined above and may further bear a fused ring of 3 to 7 atoms, e.g. 4, 5 or 6, which ring may be aromatic or partially saturated.

In a suitable subgroup of the compounds of formula (II)
each "Cp"-ligand independently bears one or more substituents selected from C1 to C20-alkyl, C6 to C20-aryl, C7 to C20-arylalkyl (wherein the aryl ring alone or as a part of a further moiety may further be substituted as indicated above), wherein R" is as indicated above, preferably C1 to C20-alkyl,
the ligand "X" is hydrogen (H), halogen, C1 to C20-alkyl, C1 to C20-alkoxy, C6 to C20-aryl, C7 to C20-arylalkenyl or $-NR''_2$ as defined above, e.g. $-N(C1\text{ to }C20\text{-alkyl})_2$, and the bridging group "R" is a methylene, ethylene or a silyl bridge, whereby the silyl can be substituted as defined above, e.g. a dimethylsilyl=, methylphenylsilyl= or trimethylsilylmethylsilyl=

-bridge.

A specific subgroup includes the well known metallocenes of Zr, Hf and Ti with one or two, e.g. two, organic ligands (L) which may be bridged or unbridged cyclopentadienyl ligands optionally substituted with e.g. siloxy, alkyl and/or aryl as defined above, or with two unbridged or bridged indenyl ligands optionally substituted in any of the ring moieties with e.g. alkyl and/or aryl as defined above, e.g. at 2-, 3-, 4- and/or 7-positions. As specific examples e.g. bis (alkylcyclopentadienyl) Zr (or Ti or Hf) dihalogenides can be mentioned, such as bis-(n-butylcyclopentadienyl)$ZrCl_2$ and bis-(n-butylcyclopentadienyl)$HfCl_2$, see e.g. EP 129 368.

Particularly preferred are the following compounds:

bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-propylcyclopentadienyl)Hf dibenzyl,
bis(i-propylcyclopentadienyl)Hf dibenzyl,
bis(1,2,4-trimethylcyclopentadienyl)Zr dibenzyl,
bis(tetrahydroindenyl)Zr dibenzyl,
bis(n-butylcyclopentadienyl)Hf $(CH_2SiMe_3)_2$,
bis(n-propylcyclopentadienyl)Hf $(CH_2SiMe_3)_2$,
bis(i-propylcyclopentadienyl)Hf $(CH_2SiMe_3)_2$
bis(1,2,4-trimethylcyclopentadienyl)$Zr(CH_2SiMe_3)_2$,
rac-dimethylsilanediylbis(2-methyl-4-phenylindenyl)zirconium dichloride,
rac-cyclohexyl(methyl)silanediylbis[2-methyl-4-(4'-*tert*- butylphenyl)indenyl]zirconium dichloride,
rac-dimethylsilanediyl[2-methyl-4-(4'-*tert*-butylphenyl)indenyl] [2-isopropyl-4-(4'-*tert*-butylphenyl)indenyl]zirconium dichloride,
wherein Me is methyl.

Most preferred compounds are Hf dibenzyl and Zr dichloride compounds of the above list, i.e.

bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-propylcyclopentadienyl)Hf dibenzyl,
bis(i-propylcyclopentadienyl)Hf dibenzyl,
rac-dimethylsilanediylbis(2-methyl-4-phenylindenyl)zirconium dichloride,
rac-cyclohexyl(methyl)silanediylbis[2-methyl-4-(4'-tert- butylphenyl)indenyl] zirconium dichloride and
rac-dimethylsilanediyl[2-methyl-4-(4'-tert-butylphenyl)indenyl] [2-isopropyl-4-(4'-tert-butylphenyl)indenyl]zirconium dichloride.

Examples of compounds wherein the metal atom bears a-$NR''_2$ ligand are disclosed i.a. in WO 98/56831 and WO 00/34341. The contents of the documents are incorporated herein by reference. Further metallocenes are described e.g. in EP 260 130. As further examples of usable metallocenes may also be found e.g. from WO 97/28170, WO 98/46616, WO 98/49208, WO 99/12981, WO 99/19335, WO 98/56831, WO 00/34341, EP 423 101 and EP 537 130 as well as V. C. Gibson et al., in Angew. Chem. Int. Ed., engl., vol 38,1999, pp 428-447, the disclosures of which are incorporated herein by reference.

Said transition metal compounds of formula (I) and (II) being of metallocene type and their preparation are well known in the art. Metallocenes as defined in the instant invention are particularly preferred.

Alternatively, in a further subgroup of the metallocene compounds, the transition metal (M) bears a "Cp"-ligand as defined above and additionally a $\eta^1$- or $\eta^2$-ligand, wherein said ligands may or may not be bridged to each other. This subgroup includes so called "scorpionate compounds" (with constrained geometry) in which the transition metal (M) is complexed by a $\eta^5$-ligand bridged to a $\eta^1$- or $\eta^2$-ligand, preferably $\eta^1$- (for example $\sigma$-bonded) ligand, e.g. a metal complex of a "Cp"-ligand as defined above, e.g. a cyclopentadienyl group, which bears, via a bridge member, an acyclic or cyclic group containing at least one heteroatom, e.g. -$NR''_2$ as defined above. Such compounds are described e.g. in WO 96/13529, the contents of which are incorporated herein by reference.

Any alkyl, alkenyl or alkynyl residue referred above alone or as a part of a moiety may be linear or branched, and contain preferably of up to 9, e.g. of up to 6, carbon atoms. Aryl is preferably phenyl or naphthalene. Halogen means F, Cl, Br or I, preferably Cl.

Another subgroup of the transition metal compounds of formula (I) usable in the present invention is known as non-metallocenes wherein the transition metal (M) (preferably a Group 4 to 6 transition metal, suitably Ti, Zr or Hf) has

a coordination ligand other than cyclopentadienyl ligand.

The term "non-metallocene" used herein means compounds, which bear no cyclopentadienyl ligands or fused derivatives thereof, but one or more non-cyclopentadienyl η-, or σ-, mono-, bi- or multidentate ligand. Such ligands can be chosen e.g. from

(a) acyclic, $\eta^1$- to $\eta^4$- or $\eta^6$-ligands composed of atoms from Groups 13 to 16 of the periodic table (IUPAC), e.g. an acyclic pentadienyl ligand wherein the chain consists of carbon atoms and optionally one or more heteroatoms from groups 13 to 16 (IUPAC), and in which the open chain ligand may be fused with one or two, preferably two, aromatic or non-aromatic rings and/or bear further substituents (see e.g. WO 01/70395, WO 97/10248 and WO 99/41290), or
(b) cyclic σ-, $\eta^1$- to $\eta^4$-or $\eta^6$-, mono-, bi-or multidentate ligands composed of unsubstituted or substituted mono-, bi- or multicyclic ring systems, e.g. aromatic or non-aromatic or partially saturated ring systems, containing carbon ring atoms and optionally one or more heteroatoms selected from groups 15 and 16 of the periodic table (IUPAC) (see e.g. WO 99/10353).

Bi-or multidentate ring systems include also bridged ring systems wherein each ring is linked via a bridging group, e. g. via an atom from groups 15 or 16 of the periodic table (IUPAC), e.g. N, O or S, to the transition metal (M) (see e.g. WO 02/060963). As examples of such compounds, i.a. transition metal complexes with nitrogen-based, cyclic or acyclic aliphatic or aromatic ligands, e.g. such as those described in WO 99/10353 or in the Review of V. C. Gibson at al., in Angew. Chem. Int. Ed., engl. , vol 38,1999, pp 428-447, or with oxygen-based ligands, such as group 4 metal complexes bearing bidentate cyclic or acyclic aliphatic or aromatic alkoxide ligands, e.g. optionally substituted, bridged bisphenolic ligands (see i.a. the above review of Gibson et al). Further specific examples of non- $\eta^5$-ligands are amides, amide-diphosphane, amidinato, aminopyridinate, benzamidinate, azacycloalkenyl, such as triazabicycloalkenyl, allyl, beta-diketimate and aryloxide. The disclosures of the above documents are incorporated herein by reference.

The preparation of metallocenes and non-metallocenes, and the organic ligands thereof, usable in the invention is well documented in the prior art, and reference is made e.g. to the above cited documents. Some of said compounds are also commercially available. Thus, said transition metal compounds can be prepared according to or analogously to the methods described in the literature, e.g. by first preparing the organic ligand moiety and then metallating said organic ligand (η-ligand) with a transition metal. Alternatively, a metal ion of an existing metallocene can be exchanged for another metal ion through transmetallation.

As a further requirement the catalyst system (B) must comprise a cocatalyst (Co). Any cocatalyst (Co) comprising a compound of Al is suitable. Examples of such cocatalyst (Co) are organo aluminium compounds, such as alkyl aluminium compound, like trialkylaluminium compound and/or aluminoxane compound.

Further aluminoxane cocatalysts are described i.a. in WO 94/28034 which is incorporated herein by reference. These are linear or cyclic oligomers of having up to 40, preferably 3 to 20, -(Al (R'")O)- repeating units (wherein R'" is hydrogen, C1 to C10-alkyl (preferably methyl) or C6 to C18-aryl or mixtures thereof).

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however the catalyst system (B) comprises only compounds of Al as cocatalyst (Co)

In particular preferred cocatalysts (Co) for the catalyst system (B) are the aluminoxanes, in particular the C1 to C10-alkylaluminoxanes, most particularly methylaluminoxane (MAO).

However it is in particular preferred that aluminoxanes, in particular the C1 to C10-alkylaluminoxanes, most particularly methylaluminoxane (MAO), is used as the only cocatalyst (Co) within the catalyst system (B) and/or within the solid catalyst composition.

In case of aluminoxanes, such as methylaluminumoxane (MAO), the amount of A1, provided by aluminoxane, can be chosen to provide an Al/transition metal (M) molar ratio e.g. in the range of 50 to 800, preferably in the range of 150 to 600, and nore preferably in the range of 200 to 400 mol/mol

In a specific embodiment the present disclosure is directed to a solid catalyst composition in which the catalyst system (B) as defined above is solid, self-supported, i.e. the catalyst system (B) does not comprise catalytically inert carrier material, such as organic and inorganic support materials, like silica, $MgCl_2$ or porous polymeric material.

It is further appreciated that not only the catalyst system (B) which has been used for the solid catalyst composition is preferably self-supported as defined above, but also that the whole solid catalyst composition does not comprise any inert carrier material as those mentioned in the instant invention. Thus it is preferred that the solid catalyst composition comprises the polymer matrix (A) but is free of any external catalytically inert carrier material, such as organic and inorganic support materials, like silica, $MgCl_2$ or porous polymeric carrier material. Even though also the matrix (A) is a polymeric material it is not like an external porous support material, onto which catalyst components are loaded, but polymer matrix of the present invention is formed during the polymerisation of monomers by using the catalyst

system (B). In case of prior art, where porous external polymer material is used as carrier, the final catalyst will have porous structure as well. However, when solid catalyst system (B), having a compact morphology (very low porosity) is used in polymerising olefin to get a solid catalyst composition, the morphology of the final catalyst composition is, due to the replica effect, compact as well. Thus the morphology and function of polymer matrix (A) of the present invention, and a porous polymer carrier material differ essentially from each other.

Accordingly in a preferred embodiment the solid catalyst composition comprises the polymer matrix (A) and the catalyst system (B) as defined in the instant invention but is free of silica carrier material and/or $MgCl_2$ and/or porous polymeric material, more preferably free of any organic and/or inorganic catalytically inert support or carrier material.

The catalyst system (B), used in the preparation of the catalyst composition of the present disclosure, is further featured by its low porosity and/or its rather low surface area. In other words the surface area is essentially free of pores penetrating into the interior of the catalyst system (B). Such a plain surface of the catalyst system (B) is desirable as it positively contributes to the end properties of the polymerized material. Inter alia a low surface area of the catalyst system (B) improves the bulk density which in turn improves the output rates of the applied process.

Typically the catalyst system (B) has a surface area measured according to ASTM D 3663 of less than 25 $m^2/g$, more preferably of less than 20 $m^2/g$, yet more preferably of less than 15 $m^2/g$, still yet more preferably of less than 10 $m^2/g$. In some embodiments, the catalyst system (B) shows a surface area of 5 $m^2/g$ or less (ASTM D 3663), which is below the detection limit of the apparatus used (BET method/$N_2$).

The catalyst system (B) can be additionally or alternatively defined by the pore volume. Thus it is appreciated that the catalyst system (B) has a porosity measured according to ASTM 4641 of less than 1.40 ml/g, more preferably of less than 1.00 ml/g, still more preferably of less than 0.50 ml/g and even less than 0.20 ml/g. In another preferred embodiment the porosity is not detectable when determined with the method applied as defined in the example section.

Moreover the catalyst system (B) typically has a mean particle size of not more than 500 $\mu$m, i.e. in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m. In some cases the mean particle size is in the range of 20 to 50 $\mu$m.

Further the solid catalyst composition is in particular obtainable, preferably is obtained, according to the process as defined herein. Thus the present invention is directed to the process for the manufacture of the inventive solid catalyst composition.

First the manufacture of the catalyst system (B) is specified. The above described catalyst system (B) is prepared according to the general methods described in WO 03/051934. This document is herewith included in its entirety by reference. Hence the catalyst system (B) is preferably in the form of solid catalyst particles, obtainable by a process comprising the steps of

(a) preparing a solution of one or more components of the catalyst system (B);
(b) dispersing said solution in a solvent immiscible therewith to form an emulsion in which said one or more components are present in the droplets of the dispersed phase,
(c) solidifying said dispersed phase to convert said droplets to solid particles and optionally recovering said particles to obtain said catalyst system (B).

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or - cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst system (B). The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a

halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

The thus obtained catalyst system (B) is further employed in the new process for the manufacture of the new solid catalyst system.

In the broadest aspect the solid catalyst composition is produced by polymerizing olefin monomers, like α-olefins, in the presence of the above defined solid catalyst system (B), i.e. preferably in the presence of a self-supported solid catalyst system (B) comprising a transition metal compound of formula (I) and a cocatalyst (Co). Thus the polymerization is a heterogeneous polymerization. As a consequence of the polymerization process the catalyst system (B) will be dispersed in the growing polymer matrix (A). To avoid an overheating during the polymerization and a dissolving of the catalyst system (B) the polymerization is run in an oily medium.

Accordingly the process for the manufacture of a solid catalyst composition according to this invention comprises the steps of

(a) forming in a vessel a catalyst oil slurry comprising a catalyst system (B) and an oil (O), wherein the catalyst system (B)

(i) comprises

(α) a transition metal compound of formula (I)

$$L_mR_nMX_q \qquad (I)$$

wherein

"M" is a transition metal of anyone of the groups 3 to 10 of the periodic table (IUPAC),
each "X" is independently a monovalent anionic σ-ligand,
each "L" is independently an organic ligand which coordinates to the transition metal (M),
"R" is a bridging group linking two organic ligands (L),
"m" is 2 or 3,
"n" is 0, 1 or 2,
"q" is 1, 2 or 3, and
m+q is equal to the valency of the transition metal (M), and

(β) a cocatalyst (Co) comprising a metal (M') of Group 13 of the periodic table (IUPAC), preferably a cocatalyst (Co) comprising a compound of Al,

(ii) has

(α) a porosity measured according to ASTM 4641 of less than 1.40 ml/g, preferably of less than 1.00 ml/g, more preferably of less than 0.50 ml/g, still more preferably of less than 0.20 ml/g and even more preferably the porosity is not detectable,
and/or
(β) a surface area measured according to ASTM D 3663 of less than 15 $m^2/g$, still more preferably of less than 10 $m^2/g$, yet more preferably of less than 5 $m^2/g$,

and
(iii) is free of silica carrier material and/or $MgCl_2$ and/or porous polymeric material, more preferably is free of any organic and/or inorganic catalytically inert support material,

(b) feeding at least one olefin monomer, preferably at least one α-olefin monomer, into the vessel,

(c) operating the vessel under such conditions that the at least one olefin monomer is polymerized by the catalyst system (B), producing thereby a solid catalyst composition comprising a polymer matrix (A) in which the catalyst system (B) is dispersed,

(d) terminating the polymerization of step (c) before the weight ratio of the polymer matrix (A) and the catalyst system (B) [weight polymer matrix (A)/weight catalyst system (B)] in the solid catalyst composition is from 1.0 to 6.0.

The termination of the polymerization of step (c) is accomplished so that the weight ratio of the polymer matrix (A) and the catalyst system (B) [weight polymer matrix (A)/weight catalyst system (B)] in the solid catalyst composition from 1.0 to 6.0, still more preferably from 1.0 to 5.0 and still yet more preferably of from 2.0 to 5.0.

The vessel used in the manufacture of the present invention is preferably stirred well in order to facilitate the dissolution of the gaseous monomer and keeping the monomer concentration constant in the oil.

The catalyst system (B) has a mean particle size in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m. In some cases the mean particle size is in the range of 20 to 50 $\mu$m.

Preferred used catalyst systems (B) are those which have been indicated as preferred in the instant invention above. Thus concerning the definition of the transition metal compound, the transition metal (M), the $\sigma$-ligand (X), the organic ligand(s) (L), the bridging group(s) (R) and the cocatalyst (Co) it is referred to the definitions given above when defining the solid catalyst composition.

In this context it is in particular mentioned that the organic ligands (L) and the bridging groups (R) do not comprise polymerizable olefinic groups having the formula (IV), more preferably do not comprise olefinically unsaturated substituents, still more preferably do not comprise polymerizable olefinic groups.

The oil (O) to be used must be inert towards the catalyst. This means that it must preferably not contain components having tendency to react with the catalyst system (B), such as groups containing atoms selected from oxygen, sulphur, nitrogen, chlorine, fluorine, bromine, iodine and so on. Also groups containing double bonds or triple bonds should be avoided. Especially the presence of compounds like water, alcohols, organic sulphides, ketones, carbon monoxide, carbon dioxide and acetylenic compounds should be avoided.

Preferably the oil (O) is hydrocarbon oil or silicon oil, more preferably hydrocarbon oil. It is in particular preferred that the oil (O), i.e. the hydrocarbon oil or silicon oil, contains less than 100 parts per million (ppm) of compounds containing groups as mentioned in the previous paragraph. More preferably the content of such compounds is less than 50 ppm, still more preferably less than 10 ppm, yet more preferably below the detection limit.

The viscosity of the oil (O) during the catalyst polymerisation into the matrix (A) can be within reasonable broad ranges. As preferably the reaction mixture is stirred during this step, settling is of no problem, if low viscosity oils are used. After the desired catalyst composition of polymers matrix (A) and catalyst system (B) is obtained, the catalyst composition-oil slurry should be readily transportable into the polymerisation reactor. If desired, the viscosity of the slurry can be adjusted, i.e. increased afterwards by adding some more viscous material, e.g. grease, like vaseline into the system. The optimal viscosity of the catalyst composition-oil-slurry depends on the catalyst feeding systems in the process. If the viscosity will be kept too low, it might cause some settling problems during any storage time. However, if stirring systems are in use, this is not a problem. Too high viscosities of the slurry require special dosing systems.

Thus it is appreciated that the dynamic viscosity of the oil (O) is from 5 to 3000 mPa•s at the operating temperature of the vessel, more preferably at temperature range from room-temperature (20 °C) to 70 °C. Preferably the dynamic viscosity is from 10 to 1500 mPa•s, more preferably from 20 to 990 mPa•s, when measured at the operating temperature of the vessel, more preferably at temperature range from room-temperature to 70 °C.

Moreover it is appreciated that the oil (O), preferably in case white oil is used, has density measured according to DIN EN ISO 12185 from 750 to 900 kg/$m^3$.

Additionally it is preferred that the solubility of the catalyst system (B) within the oil (O) is rather low. Thus the oil (O) shall be preferably selected in such a manner that the catalyst system (B) has a solubility in the oil [amount of catalyst system (B) solved in 100 g oil] below 0.1 g. I.e. catalyst system (B) is dissolved not more than 0.1 wt-%, preferable less than 0.08 wt-%.

Examples of suitable oils (O) are mineral oils and synthetic oils comprising essentially hydrocarbons containing from 15 to 100 carbon atoms, like Synton PAO 100, which is a synthetic oil supplied by Crompton Petroleum Additives, Shell Cassida HF 15, Shell Cassida HF 32, Shell Cassida 46, Shell Cassida HF 68 and Shell Cassida HF 100, which are synthetic oils supplied by Shell, Drakeol 35, which is a synthetic oil supplied by Penreco, Ondina 68, which is a mineral oil supplied by Shell and Primol 352, which is supplied by ExxonMobil. From the commercial products in particular Primol products, like Primol 352, are preferred.

The oil slurry may be formed in any method known in the art. According to a preferred method, the solid catalyst system (B) is introduced into the oil (O) under agitation. The slurry may be prepared in the vessel or it may be prepared in advance and then transferred into the vessel. Further, the solid catalyst system (B) may also be delivered into the

vessel as concentrated slurry, which may then be diluted with oil (O) in the vessel.

The oil slurry may be homogenised by agitation. The agitation can be obtained by circulating the oil slurry by using a circulation pump and pipes connecting the pump to the vessel. Alternatively, the vessel is equipped with an agitator, which keeps the oil slurry within the vessel in motion, and facilitates the dissolution of gaseous monomer into the oil. Preferably the vessel is equipped with an agitator. The elements of the agitator should be chosen so that uniform stirring in the whole volume of the vessel is obtained and no dead spots where the catalyst system (B) could settle exist. These stirrer elements, such as anchor type elements and axial and radial impellers are well known in the art and a person skilled in the art can choose a suitable combination for each geometry of the vessel. The vessel may also be equipped with baffles, which are known in the art to further improve the stirring.

As monomers preferably olefins, like $\alpha$-olefins, are employed. More preferably the olefins, like $\alpha$-olefins, have 2 to 20 carbon atoms. The olefins, like $\alpha$-olefins, can be linear or branched, cyclic or acyclic, aromatic or aliphatic. Preferred examples are ethylene, propylene, 1-butene, 1-pentene, 2-methyl-1-butene, 3-methyl-1-butene, 1-hexene, 2-methyl-1-pentene, 3-methyl-1-pentene, 4-methyl-1-pentene, 2-ethyl-1-butene, 2,3-dimethyl-1-butene, 1-octene, styrene, and vinylcyclohexane. Most preferably is (are) ethylene and/or propylene.

The temperature of the slurry within the vessel during polymerization in step (c) depends on the catalyst system (B) used as well as on the monomers chosen. Thus it is appreciated that the reaction temperature is equal or below 70 °C, more preferably below 65 °C. Of course also to loo low temperatures might cause problems because the viscosity might be too high then. Thus the temperature may be selected from the range of from -30 to 70 °C, more preferably from 0 to 65 °C, yet more preferably from 20 to 55 °C.

The pressure within the vessel at step (c) of the polymerization process shall be kept in a certain range. It is desired that the pressure in the vessel is higher than the atmospheric pressure to minimise the eventual leaks of air and/or moisture into the catalyst feed vessel. Thus it is appreciated that the pressure is in the range of at least 0.2 to 15 bar, more preferably in the range of 1 to 10 bar, even more preferred in the range of 2.5 to 8 bar.

The vessel shall be maintained in inert atmosphere. Especially, the presence of oxygen and moisture should be avoided.

The gas phase in the vessel should preferably consist of nitrogen, argon and similar inert gases, or their mixtures. Also, the vessel should be equipped with possibility to flush the vessel with inert gas, preferably with nitrogen. Of course in addition to the used monomers, in gaseous form, also hydrogen, used as molecular weight controlling agent is preferably fed into the vessel.

After the desired polymerization degree the polymerization is terminated (step (d)). The termination is preferably achieved by degassing the vessel.

After the termination of the polymerization the oil slurry preferably comprises at least 20 wt.-%, more preferably up to 25 wt.-% of the produced solid catalyst composition.

Preferably, the oil slurry is removed from the vessel after the termination of the polymerization process and optionally stored. The thus obtained solid catalyst composition can be, if desired, extracted from the oil. However, it is also possible to use the prepared catalyst composition-oil slurry as such in the polymerisation process, without any extraction or drying steps.

The solid catalyst composition as defined in the instant invention can be used without any modification in a process comprising at least one polymerisation reactor as known in the art, like slurry, gas phase, solution reactors. Preferably the polymerisation process configuration comprises at least one slurry reactor, preferably a slurry loop reactor. In addition the process can comprise additional slurry and/or gas phase reactors, as described earlier in this application. Further, in addition to actual polymerisation reactors, the process can comprise prepolymerisation reactors preceding the actual polymerisation steps. Preferably the solid catalyst composition of the present invention is used for the polymerization of polyethylene and/or polypropylene.

The invention will be now described in further detail by providing the following examples.

## EXAMPLES

### 1. Definitions/Measuring Methods

The following definitions of terms and determination methods apply for the above general description of the invention as well as to the below examples unless otherwise defined.

**$MFR_2$ (230 °C)** is measured according to ISO 1133 (230 °C, 2.16 kg load).

**$MFR_2$ (190 °C) is** measured according to ISO 1133 (190 °C, 2.16 kg load).

**$MFR_{10}$ (230 °C)** is measured according to ISO 1133 (230 °C, 10,0kg load).

**Melting temperature Tm, Crystallization temperature Tc:**

Method 1 for polyethylene

The Melting Temperature ($T_m$) and the Crystallization Temperature ($T_{cr}$) were measured with Mettler TA820 differential scanning calorimeter (DSC) on 3±0.5 mg samples. Both crystallization and melting curves were obtained during 10°C/min cooling and heating scans between -10 - 200 °C. Melting and crystallization temperatures were taken as the peaks of endotherms and exotherms, respectively.

Method 2 for polypropylene

Melting temperature ($T_m$), crystallization temperature ($T_{cr}$), and the degree of crystallinity: measured with Mettler TA820 differential scanning calorimetry (DSC) on 5 to 10 mg, typically 8±0.5 mg samples. Both crystallization and melting curves were obtained during 10°C/min cooling and heating scans between 30 °C and 225 °C. Melting and crystallization temperatures were taken as the peaks of endotherms and exotherms.

**Kinematic viscosity**

Kinematic viscosity of the oil was measured according to ISO 3104.

**Comonomer content from PP (FTIR)**

Ethylene content in propylene polymer was measured by Fourier transmission infrared spectroscopy (FTIR). A thin film of the sample (thickness approximately 250 μm) was prepared by hot-pressing. The area of -CH2- absorption peak (800 - 650 cm-1) was measured with Perkin Elmer FTIR 1600 - spectrometer. The method was calibrated by ethylene content data measured by $^{13}C$ NMR.

**Comonomer content from PE (FTIR)**

Comonomer content was determined in a known manner based on Fourier transform infrared spectroscopy (FTIR) determination using Nicolet Magna 550 IR spectrometer together with Nicolet Omnic FTIR software.

Films having a thickness of about 220 to 250 μm were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

From the calibration samples a straight line is obtained as follows:

$$C_i = k \cdot \frac{A_{1378,i}}{s_i} + b$$

where

$C_i$ is the comonomer content of the calibration sample i
$A_{1378,i}$ is the absorbance at appr. 1378 $cm^{-1}$ of sample i

$s_i$ is the thickness of the film made of calibration sample i
k is the slope of the calibration line (obtained by regression analysis), and
b is the intercept of the calibration line (obtained by regression analysis).

By using the thus obtained parameters k and b the comonomer content of the samples were obtained from

$$C_x = k \cdot \frac{A_{1378,x}}{s_x} + b$$

where

$C_x$ is the comonomer content of the unknown sample
$A_{1378,x}$ is the absorbance at appr. 1378 $cm^{-1}$ of the unknown sample
$s_x$ is the thickness of the film made of the unknown sample
k is the slope of the calibration line obtained from the calibration samples as above
b is the intercept of the calibration line obtained from the calibration samples.

The method gives the comonomer content in weight-% or in mol-%, depending on which was used in the calibration. If properly calibrated, the same approach may also be used to determine the number of methyl groups, i.e., $CH_3$ per 1000 carbon atoms.

**Density**

Density of the oil was measured according to ISO 12185.
Density of the polymer was measured according to ISO 1183-2 / 1872-2B

**Dynamic viscosity**

Dynamic viscosity of the oil was obtained as the product of the kinematic viscosity and the density.
**Porosity:** BET with $N_2$ gas, ASTM 4641, apparatus Micromeritics Tristar 3000;
sample preparation at a temperature of 50 °C, 6 hours in vacuum.
**Surface area:** BET with $N_2$ gas ASTM D 3663, apparatus Micromeritics Tristar 3000: sample preparation at a temperature of 50 °C, 6 hours in vacuum.
**Mean particle size** is measured with Coulter Counter LS200 at room temperature with n-heptane as medium;
**Median particle size** ($d_{50}$) is measured with Coulter Counter LS200 at room temperature with n-heptane as medium
**Bulk density BD** of the polymer powder was determined according to ASTM D1895-96, method A.

**ICP analysis**

The elemental analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours.
The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$, 3 % HF in DI water), a low standard (10 ppm Al in a solution of 5 % $HNO_3$, 3 % HF in DI water), a high standard (50 ppm Al, 50 ppm Hf, 20 ppm Zr in a solution of 5 % $HNO_3$, 3 % HF in DI water) and a quality control sample (20 ppm Al, 20 ppm Hf, 10 ppm Zr in a solution of 5 % $HNO_3$, 3 % HF in DI water).
The content of hafnium was monitored using the 282.022 nm and 339.980 nm lines and the content for zirconium using 339.198 nm line. The content of aluminium was monitored via the 167.081 nm line, when Al concentration in ICP sample was between 0-10 ppm and via the 396.152 nm line for Al concentrations between 10-100 ppm.
The reported values, required to be between 0 and 100, or further dilution is required, are an average of three successive aliquots taken from the same sample and are related back to the original catalyst using equation 1.

$$C = \frac{R \times V}{M} \qquad \text{Equation 1}$$

wherein

C is the concentration in ppm, related to % content by a factor of 10,000
R is the reported value from the ICP-AES
V is the total volume of dilution in ml
M is the original mass of sample in g

If dilution was required then this also needs to be taken into account by multiplication of C by the dilution factor.

**2. Preparation of the Examples:**

**Example 1 (reference example)**

Catalyst system based on complex: bis(n-butyl-cyclopentadienyl)hafnium dibenzyl $(n\text{-}BuCp)_2\text{-}HfBz_2$

Catalyst system is prepared as follows:

In a jacketed 90 $dm^3$ glass-lined stainless steel reactor the complex solution was prepared at-5 °C adding 1.26 kg of a 24.5 wt.-% PFPO ((2,2,3,3,4,4,5,5,6,6,7,7,8,8,9,9,9-heptadecafluorononyl)oxirane)/toluene solution very slowly (3.4 ml/min) to 20 kg 30 wt.-% methylaluminoxane/toluene solution. The temperature was increased to 25 °C and the solution was stirred for 60 minutes. After addition of 253 g of complex (Hf-content 78,8 w% in toluene) the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC (hexadecafluoro-1,3-dimethylcyclohexane) thus forming an emulsion. The droplets in the emulsion were solidified by an excess flow of 450 l/h PFC at a temperature of 60 °C in a Teflon hose. The hose was connected to a jacketed 160 $dm^3$ stainless steel reactor equipped with a helical mixing element. In this reactor the catalyst particles were separated from the PFC by density difference. After the complex solution had been utilized the catalyst particles were dried in the 160 $dm^3$ reactor at a temperature of 70 °C and a nitrogen flow of 5 kg/h for 4 h.

| | |
|---|---|
| Porosity: | Below the detection limit |
| Surface area: | Below the detection limit |
| Particle mean size: | 55 μm |
| Molar ratio Al/Hf: | 300 mol/mol |
| Al content: | 34.4 wt-%, |
| Hf content: | 0.71 wt-%. |

Preparation of catalyst composition:

The catalyst oil slurry was prepared by measuring 40 mL of Primol 352 (white oil) and 170.6 mg of catalyst system prepared above in example 1 into a 125-mL stainless steel reactor. Shortly after that temperature was set to 30 °C. Stirring was set to 200 rpm. The polymerisation was initiated by the addition of ethylene. Under the polymerisation the total pressure was kept at 2 bar. The reaction was continued for 77 min after which the reactor was degassed and flushed repeatedly with nitrogen. The ethylene consumption was monitored during the polymerisation. 0.09 g of ethylene was consumed after the oil was saturated with ethylene. Hence the polymerisation degree was 0.5 g polymer/g catalyst. Slurry concentration, based on the amount of original catalyst system in oil, was 0.5 wt.-%,

**Example 2**

The catalyst oil slurry was prepared by measuring 40 mL of Primol 352 (white oil) and 177.3 mg of catalyst system prepared above in example 1 into a 125-mL stainless steel reactor. Shortly after that temperature was set to 50 °C. Stirring was set to 200 rpm. The polymerisation was initiated by the addition of ethylene. Under the polymerisation the total pressure was kept at 2 bar. The reaction was continued for 53 min after which the reactor was degassed and

flushed repeatedly with nitrogen. The ethylene consumption was monitored during the polymerisation. 0.17 g of ethylene was consumed after the oil was saturated with ethylene. Hence the polymerisation degree was 1.0 g polymer/g catalyst. Slurry concentration, based on the amount of original catalyst system in oil, was 0.5 wt.-%,

**Example 3 (reference example)**

The catalyst oil slurry was prepared by measuring 40 mL of Primol 352 (white oil) and 293.1 mg of catalyst system prepared above in example 1 into a 125-mL stainless steel reactor. Shortly after that temperature was set to 30 °C. Stirring was set to 200 rpm. The polymerisation was initiated by the addition of ethylene. Under the polymerisation the total pressure was kept at 4 bar. The reaction was continued for 140 min after which the reactor was degassed and flushed repeatedly with nitrogen. The ethylene consumption was monitored during the polymerisation. 0.19 g of ethylene was consumed after the oil was saturated with ethylene. Hence the polymerisation degree was 0.7 g polymer/g catalyst. Slurry concentration, based on the amount of original catalyst system in oil, was 1.0 wt.-%,

**Example 4**

The catalyst oil slurry was prepared by measuring 40 mL of Primol 352 (white oil) and 170.5 mg of catalyst system prepared above in example 1 into a 125-mL stainless steel reactor. Shortly after that temperature was set to 50 °C. Stirring was set to 200 rpm. The polymerisation was initiated by the addition of ethylene. Under the polymerisation the total pressure was kept at 4 bar. The reaction was continued for 104 min after which the reactor was degassed and flushed repeatedly with nitrogen. The ethylene consumption was monitored during the polymerisation. 0.86 g of ethylene was consumed after the oil was saturated with ethylene. Hence the polymerisation degree was 5.0 g polymer/g catalyst. Slurry concentration, based on the amount of original catalyst system in oil, was 0.5 wt.-%,

**<u>Ethylene polymerization (Example 5 to 9)</u>**

Comonomer and scavenger were added directly to a 125 mL stainless steel reactor. 1-hexene is used as comonomer and 1 ml 1 wt.-% TiBA (tri-isobutyl aluminium) diluted in pentane was used as scavenger. Half of the polymerization medium was added to the reactor. The first batch of polymerization medium and the comonomer were precontacted with the scavenger for 5 min. Propane was used as polymerization medium. The catalyst composition was thereafter flushed into the reactor with the rest of the medium. The reactor was heated up to the polymerization temperature of 80 °C and the polymerization was initiated by introducing ethylene. The ethylene partial pressure was kept constant during the polymerization. After the desired polymerization time of 60 min the reactor was degassed and flushed repeatedly with nitrogen. The obtained polymer was dried over night and weighted.
Polymerization details are disclosed in Table 1.

**Table 1:** Polymerization runs with solid catalyst compositions according to examples 1 to 4

| Polymerisation | | Ex 5 | Ex 6 | Ex 7 | Ex 8 | Ex 9*** |
|---|---|---|---|---|---|---|
| Catalyst composition | | Ex 1 | Ex 2 | Ex 3 | Ex 4 | Ex 4 |
| Scale | [ml] | 125 | 125 | 125 | 125 | 5000 |
| Polymerization degree | | 0.5 | 1.0 | 0.7 | 5.0 | 5.0 |
| Amount of catalyst composition-oil-slurry | [mg] | 1069 | 1026 | 548 | 1072 | |
| Amount of catalyst system | [mg] | 5.2 | 5.2 | 4.5 | 5.1 | 41 |
| Pressure (C2) | [bar] | 7 | 7 | 7 | 7 | 5 |
| 1-hexene | [ml/(ml C3)] | 0.023 | 0.023 | 0.023 | 0.023 | 0.025 |
| Yield | [g] | 2.4 | 2.8 | 0.65 | 5.53 | 69.8 |
| Activity | [kg pol/(g cat system * h)] | 0.5 | 0.5 | 0.1 | 1.1 | 1.7 |

(continued)

| Polymerisation | | Ex 5 | Ex 6 | Ex 7 | Ex 8 | Ex 9*** |
|---|---|---|---|---|---|---|
| Catalyst composition | | Ex 1 | Ex 2 | Ex 3 | Ex 4 | Ex 4 |
| Comments | | GS* | NF** | HF** | NF** | NF** |
| *GS: Gray sheeting<br>**NF: No fouling<br>*** No scavenger used in example 9 | | | | | | |

**Examples 10 and 11 (Comparative Examples)**

In the comparative examples the Catalyst system of example 1 was used instead of catalyst compositions. Ethylene polymerization details are disclosed in Table 2.

**Table 2:** Polymerization runs with catalyst systems without a polymer matrix

| | | Ex 10 | Ex 11 |
|---|---|---|---|
| Catalyst system type | | Ex 1 | Ex 1 |
| Scale | [ml] | 125 | 125 |
| polymerization degree | | - | - |
| Amount of catalyst -oil -slurry | [mg] | 1002 | 1060 |
| Amount of catalyst system | [mg] | 5.1 | 5.3 |
| Pressure (C2) | [bar] | 7 | 7 |
| 1-hexene | [ml/(ml C3)] | 0.023 | 0.023 |
| Yield | [g] | 1.25 | 0.50 |
| activity | [kg pol/(g cat system*h)] | 0.27 | 0.11 |
| Comments | | fouling | fouling |

Table 2 shows that if a catalyst system without a polymer matrix is fed into standard test polymerisation conditions, the catalyst fouls the reactor. Results of Table 1, on the other hand, indicate that the inventive solid catalyst compositions prevent effectively reactor fouling.

**Example 12**

Catalyst system based on complex: rac-dimethylsilanediylbis(2-methyl-4-phenylindenyl)zirconium dichloride

Catalyst system is prepared as follows:

In a jacketed 90 $dm^3$ glass-lined stainless steel reactor the complex solution was prepared at - 5°C adding 1.26 kg of a 24.5 wt% PFPO/toluene solution very slowly (3.4 ml/min) to 20 kg 30 wt.-% methylaluminoxane/toluene solution. The temperature was increased to 25 °C and the solution was stirred for 60 minutes. After addition of 242 g of the complex the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC thus forming an emulsion. The droplets in the emulsion were solidified by an excess flow of 450 l/h PFC at a temperature of 76 °C in a Teflon hose. The hose was connected to a jacketed 160 $dm^3$ stainless steel reactor equipped with a helical mixing element. In this reactor the catalyst particles were separated from the PFC by density difference. After the complex solution had been utilized the catalyst particles were dried in the 160 $dm^3$ reactor at a temperature of 70 °C and a nitrogen flow of 5 kg/h for 5 h.

Porosity: Below the detection limit
Surface area: Below the detection limit

(continued)

| | |
|---|---|
| Particle mean size: | 16 μm |
| Molar ratio Al/Zr | 230 mol/mol |
| Zr content: | 0.49 wt-% |
| Al content: | 34.4 wt-% |

Preparation of catalyst composition:

Catalyst system was polymerized in a 125 ml using the following amounts, conditions and the procedure.

The oil slurry is prepared by measuring 15 g of Primol 352 (white oil) and 500.5 mg of catalyst system of the complex into a 125-mL stainless steel reactor. Shortly after that temperature was set to 25 °C and 6 mmol hydrogen was added. Stirring was set to 450 rpm. Polymerisation was initiated by addition of propylene (≈2.1 bar partial pressure). During the polymerisation the total pressure was kept at 3.0 bar. The reaction was continued for 60 min after which the reactor was degassed and flushed repeatedly with nitrogen. The weight increase of the reactor after the polymerisation was measured to be 1.2 g from which the polymerisation degree can be calculated to be 1.2 g/0.5005g = 2.4 g polymer/g cat.

**Example 13**

Polymerisation of propylene using the solid catalyst composition from Example 12

Liquid propylene (1390 g), triethylaluminium solution (0.25 mL TEA in 5 mL of pentane) and hydrogen (20 mmol) were introduced to a 5-L stainless steel reactor. Temperature of the reactor was stabilised to 30 °C and 921 mg of the catalyst/oil slurry (corresponding to 27.6 mg of the original, non-polymerised catalyst) prepared in Example 12 was flushed to the reactor with propylene (10 g). Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 282 g. The catalyst activity was 20.4 kg PP/g•cat•h based on the amount of non-polymerised dry catalyst. The walls of the reactor were clean. The polymer powder was freely flowing with morphology replicating the morphology of the original catalyst powder. MFR (2/230) = 19.5 g/10 min.

**Example 14 (comparative)**

The polymerisation of Example 13 was repeated but this time using non-polymerised catalyst system of example 12.

The catalyst (33.8 mg) was flushed to the reactor with PFC instead of propylene. Otherwise the procedure in Example 13 was followed. The yield was 157 g corresponding to the catalyst activity of 9,3 kg PP/g•cat•h. Some polymer sheeting was seen on the reactor walls. The surface of the polymer particles was rugged and the shape of the polymer particles did not match well with the shape of the catalyst particles. MFR (2/230) = 21.6 g/10 min.

**Example 15**

The procedure of Example 12 for preparing catalyst composition was repeated, however, without addition of hydrogen and using reaction time of 40 min. The catalyst amount was 505.0 mg. The weight increase of the reactor after the polymerisation was measured to be 0.5 g from which the polymerisation degree can be calculated to be 0.5 g/0.505g = 1.0 g polymer/1.0 g cat.

**Example 16**

Polymerisation of propylene using the solid catalyst composition from Example 15

The procedure of Example 13 was repeated this time using 918.7 mg of the catalyst/oil slurry (corresponding to 29.0 mg of the original, non-polymerised catalyst) from Example 15 as a catalyst. The polypropylene yield was 203 g. The catalyst activity was 14.0 kg PP/g•cat•h based on the amount of non-polymerised dry catalyst. The walls of the reactor were clean. The polymer powder was freely flowing with morphology replicating the morphology of the original catalyst powder. MFR (2/230) = 24.9 g/10 min.

**Example 17**

The procedure of Example 12 for preparing catalyst composition was repeated, but during the polymerisation the total pressure was kept at 5.0 bar. The catalyst amount was 501.9 mg. The weight increase of the reactor after the polymerisation was measured to be 2.9 g from which the polymerisation degree can be calculated to be 2.9 g/0.5019g = 5.8 g polymer/1.0 g cat.

**Example 18**

Polymerisation of propylene using the solid catalyst composition from Example 17

The propylene polymerisation procedure of Example 13 was repeated this time using 927.1 mg of the catalyst/oil slurry (corresponding to 25.3 mg of the original, non-polymerised catalyst) from Example 17 as a catalyst. The polypropylene yield was 305 g. The catalyst activity was 24.1 kg PP/g•cat•h based on the amount of non-polymerised dry catalyst. The walls of the reactor were clean. The polymer powder was freely flowing with morphology replicating the morphology of the original catalyst powder. MFR (2/230) = 18.0 g/10 min.

**Example 19 (reference example)**

The reaction of Example 17 was repeated using reaction time of 100 min. The catalyst amount was 501.0 mg. The weight increase of the reactor after the polymerisation was measured to be 5.8 g from which the polymerisation degree can be calculated to be 5.8 g/0.501g = 11.6 g polymer/1.0 g cat.

**Example 20**

Polymerisation of propylene using the solid catalyst composition from Example 19

The propylene polymerisation procedure of Example 13 was repeated this time using 950.7 mg of the catalyst/oil slurry (corresponding to 22.2 mg of the original, non-polymerised catalyst) from Example 19 as a catalyst. The polypropylene yield was 298 g. The catalyst activity was 26.8 kg PP/g•cat•h based on the amount of non-polymerised dry catalyst. The walls of the reactor were clean. The polymer powder was freely flowing with morphology replicating the morphology of the original catalyst powder. MFR (2/230) = 18.1 g/10 min.

**Example 21**

Catalyst system of example 12 (complex rac-dimethylsilanediylbis(2-methyl-4-phenylindenyl)zirconium dichloride) was used in preparation of a solid catalyst composition. The oil slurry is prepared by measuring 15 g of Primol 352 (white oil) and 513.3 mg of said catalyst system into a 125-mL stainless steel reactor. The slurry was kept under gentle stirring for 45 hours at 25 °C. Then, 6 mmol of hydrogen was added. Stirring was set to 450 rpm. Polymerisation was initiated by addition of propylene (≈2.1 bar partial pressure). During the polymerisation the total pressure was kept at 3.0 bar. The reaction was continued for 60 min after which the reactor was degassed and flushed repeatedly with nitrogen. The weight increase of the reactor after the polymerisation was measured to be 1.1 g from which the polymerisation degree can be calculated to be 1.1 g/0.5133g = 2.1 g polymer/1.0 g cat.

**Example 22**

Polymerisation of propylene using the solid catalyst composition from Example 21

The procedure of Example 13 was repeated this time using 938.8 mg of the catalyst/oil slurry (corresponding to 28.8 mg of the non-polymerised catalyst) from Example 21 as a catalyst. The polypropylene yield was 452 g. The catalyst activity was 31.4 kg PP/g•cat•h based on the amount of non-polymerised dry catalyst. The walls of the reactor were clean. The polymer powder was freely flowing with morphology replicating the morphology of the original catalyst powder. MFR (2/230) = 9.5 g/10 min.

**Example 23 (reference example)**

Catalyst system based on complex: *rac*-cyclohexyl(methyl)silanediylbis[2-methyl-4-(4'-*tert*-butylphenyl)indenyl]zirconium dichloride

Catalyst system is prepared as follows:

In a 50-mL glass reactor, equipped with an overhead stirrer, a liquid-liquid 2-phase system was generated at 0 °C from 40 mL PFC and a catalyst solution based on 89 mg of the complex contacted with 5 mL of a 30 wt-% methylaluminoxane (MAO) solution in toluene for 30 min. To that mixture, 0.4 mL of PFPO solution in PFC [prepared by mixing 0.5 mL PFPO + 4.5 mL PFC] was added. The reaction mixture was stirred for 3 min, emulsion stability was verified, and stirring (570 rpm) was continued still for 15min at 0 °C, after which the emulsion was transferred via cannula under stirring to 100 mL of hot PFC (heated up with an oil bath at 90 °C, and stirred at 400 rpm). Stirring was continued for 15 min, after which the oil bath was taken down and the mixing speed was reduced to 300. rpm and finally switched off. The catalyst was let to float by waiting for 45 min, after which PFC was syphoned away. The solid powder was dried for 2 hours at 50 °C under argon flow.

| | |
|---|---|
| Porosity: | Below the detection limit |
| Surface area: | Below the detection limit |
| Particle mean size: | 13 μm |
| Molar ratio Al/Zr | 200 mol/mol |
| Zr content: | 0.55 wt-% |
| Al content: | 33.1 wt-% |

Preparation of catalyst composition:

The oil slurry is prepared by measuring 15 g of Primol 352 (white oil) and 180.8 mg of the catalyst system into a 125-mL stainless steel reactor. Shortly after that temperature was set to 25 °C and 6 mmol hydrogen was added. Stirring was set to 450 rpm. Polymerisation was initiated by addition of propylene (≈2.1 bar partial pressure). During the polymerisation the total pressure was kept at 3.0 bar. The reaction was continued for 60 min after which the reactor was degassed and flushed repeatedly with nitrogen. The weight increase of the reactor after the polymerisation was measured to be 1.6 g from which the polymerisation degree can be calculated to be 1.6 g/0.1808g = 8.8 g polymer/1.0 g cat.

**Example 24**

Polymerisation of propylene using the solid catalyst composition from Example 23

Liquid propylene (1100 g), triisobutylaluminium solution (0.2 mL TIBA in 4 mL of pentane) and hydrogen (15 mmol) were introduced to a 5-L stainless steel reactor. Temperature of the reactor was stabilised to 30 °C and 870 mg of the catalyst/oil slurry (corresponding to 9.2 mg of the original, non-polymerised catalyst) prepared in Example 23 was flushed to the reactor with PFC (4 mL). Stirring was set to 400 rpm. Reactor temperature was increased to 70 °C in 15 min after which the polymerisation reaction was continued for 30 min. Then, the reactor was degassed, flushed with nitrogen, and opened. The polypropylene yield was 266 g. The catalyst activity was 57.8 kg PP/g•cat•h based on the amount of non-polymerised dry catalyst. The walls of the reactor were clean. The polymer powder was freely flowing with morphology replicating the morphology of the original catalyst powder. MFR (2/230) = 9.4 g/10 min.

**Example 25 (comparative)**

The polymerisation of Example 24 was repeated but this time using non-polymerised catalyst system of Example 23 was used.

The amount of the above catalyst system which was flushed to the reactor with PFC (4 mL) was 24.0 mg. Otherwise the procedure in Example 24 was followed. The yield was 378 g corresponding to the catalyst activity of 31.5 kg PP/g•cat•h. Some polymer sheeting was seen on the reactor walls. The surface of the polymer particles was rugged and the shape of the polymer particles did not match well with the shape of the catalyst particles. MFR (2/230) = 14.8 g/10 min.

**Example 26**

Polymerisation of propylene using the solid catalyst composition from Example 23

The procedure of Example 24 was repeated this time using 850 mg of the catalyst/oil slurry (corresponding to 9.0 mg of the original, non-polymerised catalyst) from Example 23 as a catalyst. Amount of hydrogen added was 65 mmol. The polypropylene yield was 244 g. The catalyst activity was 54.2 kg PP/g•cat•h based on the original, non-polymerised dry catalyst. The walls of the reactor were clean. The polymer powder was freely flowing with morphology replicating the morphology of the original catalyst powder. MFR (2/230) = 1200 g/10 min.

**Example 27**

Copolymerisation of propylene with ethylene using the solid catalyst composition from Example 23

The procedure of Example 24 was repeated this time using 1070 mg of the catalyst/oil slurry (corresponding to 11.3 mg of the original, non-polymerised catalyst) from Example 23 as a catalyst. Amount of hydrogen added was 6 mmol. Additionally, 29.6 g of ethylene was taken to the reactor before the catalyst addition. The copolymer yield was 323 g. The catalyst activity was 57.2 kg copolymer/g•cat•h based on the amount of non-polymerised dry catalyst. The walls of the reactor were clean. The polymer powder was freely flowing with morphology replicating the morphology of the original catalyst powder. MFR (2/230) = 1.4 g/10 min. Tm = 135.6 °C, ethylene content 2.1 wt-%.

**Example 28**

The catalyst system was prepared using the same complex as in example 23 (*rac*-cyclohexyl(methyl)silanediylbis[2-methyl-4-(4'-tert-butylphenyl)indenyl]zirconium dichloride).

Catalyst system is prepared as follows:

In a jacketed 90 $dm^3$ glasslined stainless steel reactor the complex solution was prepared at-5°C adding 0.85 kg of a 24.5 wt% PFPO/toluene solution very slowly (3.4 ml/min) to 13.5 kg 30wt% MAO/toluene solution. The temperature was increased to 25°C and the solution was stirred for 60 minutes. After addition of 210 g of the complex the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC thus forming an emulsion. The droplets in the emulsion were solidified by an excess flow of 450 l/h PFC at a temperature of 76°C in a Teflon hose. The hose was connected to a jacketed 160 $dm^3$ stainless steel reactor equipped with a helical mixing element. In this reactor the catalyst particles were separated from the PFC by density difference. After the complex solution had been utilized the catalyst particles were dried in the 160 $dm^3$ reactor at a temperature of 70°C and a nitrogen flow of 5 kg/h for 7 h.

| | |
|---|---|
| Porosity: | Below the detection limit |
| Surface area: | Below the detection limit |
| Particle mean size: | 26 μm |
| mol ratio M/Co (Zr/Al): | 260 mol/mol |
| Zr content: | 0.53 wt.-% |
| Al content: | 34.5 wt.-% |

Preparation of catalyst composition:

Catalyst oil slurry was prepared by measuring precisely about 35 kg of Primol 352 white oil into a jacketed 75 $dm^3$ stainless steel reactor. The oil was vacumized by heating it to 100 °C and applying vacuum 3 times. The oil was cooled down to -5 °C. 10 kg of the oil was transferred to a vessel (A) containing 1.6 kg of catalyst system prepared above. Vessel A was put into a drum roller for 1h. 10 kg oil from the reactor was taken into another vessel (B). The content of vessel A was transferred to the reactor. The oil from vessel B was transferred to vessel A for flushing purpose and further back into the reactor. The temperature was adjusted to 25 °C and the slurry was stirred for 30 min. The slurry was filtered through a 500 micron sieve into two product vessels. The reactor was washed with hot toluene at 80 °C. The filtered slurry was transferred to the clean reactor and pressure was adjusted to 0.2 bar nitrogen. Temperature was set to 25 °C and stirring speed was adjusted to 177 rpm. Hydrogen was added so that hydrogen partial pressure was 1.2 bar. Polymerisation was initiated by addition of propylene (≈3.6 bar partial pressure). During the polymerisation the total pressure was kept at 5.0 bar. The reaction was continued for 540min after which the reactor was degassed and flushed repeatedly with nitrogen. The weight of propylene added to the reactor was 6 kg. This gives a prepolymerisation

degree of 4 g polymer/g catalyst. The catalyst concentration in this slurry is 4 wt%.

**Example 29**

Polymerisation of propylene using the solid catalyst composition from Example 28

The procedure of Example 24 was repeated this time using 810 mg of the catalyst/oil slurry (corresponding to 24.3 mg of the original, non-polymerised catalyst) from Example 28 as a catalyst. The reaction heat formation showed slightly increasing tendency over the polymerisation period of 30 min. The polypropylene yield was 320 g. The catalyst activity was 26.3 kg PP/g•cat•h based on the original, non-polymerised dry catalyst. The walls of the reactor were clean. The polymer powder was freely flowing with morphology replicating the morphology of the original catalyst powder. MFR (2/230) = 15.3 g/10 min. Bulk density 459 kg/$m^3$.

**Example 30**

Polymerisation of propylene using the solid catalyst composition from Example 28

The procedure of Example 24 was repeated this time using 810 mg of the catalyst/oil slurry (corresponding to 24.3 mg of the original, non-polymerised catalyst) from Example 28 as a catalyst. This time the reaction was continued for 60 min in stead og 30 min.. The polypropylene yield was 550 g. The catalyst activity was 22.6 kg PP/g•cat•h based on the amount of non-polymerised dry catalyst. The walls of the reactor were clean. The polymer powder was freely flowing with morphology replicating the morphology of the original catalyst powder. MFR (2/230) = 10.9 g/10 min.

**Example 31 (comparative)**

The polymerisation of Example 29 was repeated but this time using non-polymerised catalyst system of example 28.

The amount of the catalyst system which was flushed to the reactor with PFC (4 mL) was 24.4 mg. Otherwise the procedure in Example 24 was followed. The reaction heat formation was high in the initial stage of the reaction but decreased towards the end (30 min) of the polymerisation. The yield was 279 g corresponding to the catalyst activity of 22.9 kg PP/g•cat•h. Some polymer sheeting was seen on the reactor walls. The surface of the polymer particles was rugged and the shape of the polymer particles did not match well with the shape of the catalyst particles. MFR (2/230) = 12.0 g/10 min. Bulk density 410 kg/$m^3$.

**Example 32**

Polymerisation of propylene using the solid catalyst composition from Example 28

The procedure of Example 24 was repeated this time using 840 mg of the catalyst/oil slurry (corresponding to 25.2 mg of the original, non-polymerised catalyst) from Example 28 as a catalyst. No hydrogen was added to the reactor. The polypropylene yield was 113 g. The catalyst activity was 9.0 kg PP/g•cat•h based on the amount of non-polymerised dry catalyst. The walls of the reactor were clean. The polymer powder was freely flowing with morphology replicating the morphology of the original catalyst powder. MFR (10/230) = 1.8 g/10 min.

**Example 33**

Polymerisation of propylene using the solid catalyst composition from Example 28

Liquid propylene (1100 g), triisobutylaluminium solution (0.2 mL TIBA in 4 mL of pentane) and hydrogen (15 mmol) were introduced to a 5-L stainless steel reactor. Temperature of the reactor was stabilised to 30 °C and 800 mg of the catalyst/oil slurry (corresponding to 28.0 mg of the original, non-polymerised catalyst) prepared in Example 28 was flushed to the reactor with PFC (4 mL). Stirring was set to 400 rpm. Reactor temperature was increased to 80 °C in 20 min after which the polymerisation reaction was continued for 30 min. Then, the reactor was degassed, flushed with nitrogen, and opened. The polypropylene yield was 319 g. The catalyst activity was 22.8 kg PP/g•cat•h based on the amount of non-polymerised dry catalyst. The walls of the reactor were clean. The polymer powder was freely flowing with morphology replicating the morphology of the original catalyst powder. MFR (2/230) = 16.0 g/10 min.

## Claims

1. Process for the manufacture of a solid catalyst composition comprising the steps of

(a) forming in a vessel a catalyst oil slurry comprising a catalyst system (B) and an oil (O), wherein the catalyst system (B)

(i) comprises

(α) a transition metal compound of formula

$$L_mR_nMX_q \qquad (I)$$

wherein

"M" is a transition metal of anyone of the groups 3 to 10 of the periodic table (IUPAC),
each "X" is independently a monovalent anionic σ-ligand,
each "L" is independently an organic ligand which coordinates to the transition metal (M),
"R" is a bridging group linking two organic ligands (L),
said organic ligands (L) and said bridging groups (R) do not comprise polymerizable olefinic groups,
"m" is 2 or 3,
"n" is 0, 1 or 2,
"q" is 1, 2 or 3, and
m+q is equal to the valency of the transition metal (M),

and
(β) a cocatalyst (Co) comprising a metal (M') of Group 13 of the periodic table (IUPAC), preferably a cocatalyst (Co) comprising a compound of Al,

(ii) has

(α) a porosity measured according to ASTM 4641 of less than 1.40 ml/g,
and/or
(β) a surface area measured according to ASTM D 3663 of less than 15 $m^2/g$,

and
(iii) is free of silica carrier material and/or $MgCl_2$ and/or porous polymeric material, and
(iv) has a mean particle size in the range of 2 to 500 μm,

(b) feeding at least one olefin monomer, preferably at least one α-olefin monomer, into the vessel,
(c) operating the vessel under such conditions that the at least one olefin monomer is polymerized by the catalyst system (B), producing thereby a solid catalyst composition comprising a polymer matrix (A) in which the catalyst system (B) is dispersed,
(d) terminating the polymerization of step (c) when the weight ratio of the polymer matrix (A) and the catalyst system (B) [weight polymer matrix (A)/weight catalyst system (B)] in the solid catalyst composition is from 1.0 to 6.0.

**2.** Process according to claim 1, wherein

(a) the oil (O) has dynamic viscosity from 10 to 1500 mPa•s at a temperature from 20 to 70 °C and/or
(b) the oil (O) is selected in such a manner that the catalyst system (B) has a solubility in the oil [amount of catalyst system (B) solved in 100 g oil] below 0.1 g.

**3.** Process according to claim 1 or 2, wherein the oil (O) is a hydrocarbon oil.

**4.** Process according to anyone of the preceding claims 1 to 3, wherein the olefin monomer is ethylene and/or propylene.

**5.** Process according to anyone of the preceding claims 1 to 4, wherein

(a) in step (c) the temperature within the vessel is kept equal or below 70 °C and/or the pressure within the vessel is from 1 to 15 bar
and

(b) optionally in step (d) the termination of the polymerization is achieved by degassing the vessel.

## Patentansprüche

**1.** Verfahren zur Herstellung einer festen KatalysatorZusammensetzung, umfassend die Schritte von

(a) Bilden in einem Gefäß einer Katalysator-Öl-Aufschlämmung, umfassend ein Katalysator-System (B) und ein Öl (O), wobei das Katalysator-System (B)

(i) umfasst

($\alpha$) eine Übergangs-Metall-Verbindung der Formel

$$L_mR_nMX_q \qquad (I)$$

worin

"M" ein Übergangs-Metall von einer der Gruppen 3 bis 10 des Periodensystems (IUPAC) darstellt,
jedes "X" unabhängig einen einwertigen anionischen $\sigma$-Liganden darstellt,
jedes "L" unabhängig einen organischen Liganden, der an das Übergangs-Metall (M) koordiniert, darstellt,
"R" eine Brückengruppe, die zwei organische Liganden (L) verbindet, darstellt,
wobei die organischen Liganden (L) und
die Brückengruppen (R) keine polymerisierbaren olefinischen Gruppen umfassen,
"m" 2 oder 3 ist,
"n" 0, 1 oder 2 ist,
"q" 1, 2 oder 3 ist, und
m + q gleich der Wertigkeit des Übergangs-Metalls (M) ist,

und
(ß) einen Cokatalysator (Co), umfassend ein Metall (M') der Gruppe 13 des Periodensystems (IUPAC), vorzugsweise einen Cokatalysator (Co), umfassend eine Verbindung von A1,

(ii) aufweist

($\alpha$) eine Porosität, gemessen gemäß ASTM 4641, von weniger als 1,40 ml/g,
und/oder
(ß) eine Oberfläche, gemessen gemäß ASTM D 3663, von weniger als 15 $m^2$/g,

und
(iii) frei von Siliziumdioxid-Trägermaterial und/oder $MgCl_2$ und/oder porösem polymerem Material ist, und
(iv) eine mittlere Teilchengröße in dem Bereich von 2 bis 500 $\mu$m aufweist,

(b) Zuführen von mindestens einem Olefin-Monomer, vorzugsweise mindestens einem $\alpha$-Olefin-Monomer, in das Gefäß,
(c) Betreiben des Gefäßes unter solchen Bedingungen, dass das mindestens eine Olefin-Monomer durch das Katalysator-System (B) polymerisiert wird, wobei eine feste Katalysator-Zusammensetzung erzeugt wird, umfassend eine Polymer-Matrix (A), in welcher das Katalysator-System (B) dispergiert ist,
(d) Beenden der Polymerisation von Schritt (c), wenn das Gewichts-Verhältnis der Polymer-Matrix (A) und des Katalysator-Systems (B) [Gewicht Polymer-Matrix (A) / Gewicht Katalysator-System (B)] in der festen Katalysator-Zusammensetzung von 1,0 bis 6,0 ist.

**2.** Verfahren nach Anspruch 1, wobei

(a) das Öl (O) eine dynamische Viskosität von 10 bis 1500 mPa·s bei einer Temperatur von 20 bis 70°C aufweist und/oder
(b) das Öl (O) in einer derartigen Weise ausgewählt ist, dass das Katalysator-System (B) eine Löslichkeit in

dem Öl [Menge des Katalysator-Systems (B), gelöst in 100 g Öl] von unter 0,1 g aufweist.

**3.** Verfahren nach Anspruch 1 oder 2, wobei das Öl (O) ein Kohlenwasserstofföl ist.

**4.** Verfahren nach einem der vorangehenden Ansprüche 1 bis 3, wobei das Olefin-Monomer Ethylen und/oder Propylen ist.

**5.** Verfahren nach einem der vorangehenden Ansprüche 1 bis 4, wobei

(a) in Schritt (c) die Temperatur in dem Gefäß gleich oder unter 70°C gehalten wird und/oder der Druck in dem Gefäß von 1 bis 15 Bar ist
und
(b) gegebenenfalls in Schritt (d) die Beendigung der Polymerisation durch Entgasen des Gefäßes erreicht wird.

**Revendications**

**1.** Procédé pour la fabrication d'une composition de catalyseur solide, comprenant les étapes

(a) de formation dans une cuve d'une bouillie huileuse de catalyseur comprenant un système catalyseur (B) et une huile (0), où le système catalyseur (B)

(i) comprend

($\alpha$) un composé de métal de transition de formule

$$L_mR_nMX_q \qquad \text{(I)}$$

dans laquelle

"M" est un métal de transition de l'un quelconque des Groupes 3 à 10 du Tableau Périodique (IUPAC),
chaque "X" est indépendamment un ligand $\sigma$ anionique monovalent,
chaque "L" est indépendamment un ligand organique qui se coordonne au métal de transition (M),
"R" est un groupe pontant liant deux ligands organiques (L),
lesdits ligands organiques (L) et lesdits groupes pontants (R) ne comprenant pas de groupes oléfiniques polymérisables,
"m" vaut 2 ou 3,
"n" vaut 0, 1 ou 2,
"q" vaut 1, 2 ou 3, et
m+q est égale à la valence du métal de transition (M),

et
($\beta$) un cocatalyseur (Co) comprenant un métal (M') du Groupe 13 du Tableau Périodique (IUPAC), de préférence un cocatalyseur (Co) comprenant un composé d'Al,

(ii) présente

($\alpha$) une porosité, mesurée conformément à la norme ASTM 4641, inférieure à 1,40 ml/g,
et/ou
($\beta$) une surface spécifique, mesurée conformément à la norme ASTM D 3663, inférieure à 15 $m^2$/g,

et
(iii)est exempt de matériau de support à base de silice et/ou de $MgCl_2$ et/ou de matériau polymère poreux, et
(iv) a une granulométrie moyenne située dans la plage allant de 2 à 500 $\mu$m,

(b) d'introduction d'au moins un monomère d'oléfine, de préférence au moins un monomère d'$\alpha$-oléfine, dans la cuve,

(c) de fonctionnement de la cuve dans des conditions telles que l'au moins un monomère d'oléfine soit polymérisé par le système catalyseur (B), en produisant ainsi une composition de catalyseur solide comprenant une matrice polymère (A) dans laquelle le système catalyseur (B) est dispersé,
(d) de terminaison de la polymérisation de l'étape (c) quand le rapport en poids de la matrice polymère (A) et du système catalyseur (B) [poids de la matrice polymère (A) / poids du système catalyseur (B)] dans la composition de catalyseur solide est de 1,0 à 6,0.

**2.** Procédé selon la revendication 1, dans lequel

(a) l'huile (0) présente une viscosité dynamique de 10 à 1500 mPa.s à une température de 20 à 70°C, et/ou
(b) l'huile est choisie de sorte que le système catalyseur (B) ait une solubilité dans l'huile [quantité de système catalyseur (B) dissous dans 100 g d'huile] inférieure à 0,1 g.

**3.** Procédé selon la revendication 1 ou 2, dans lequel l'huile (O) est une huile hydrocarbonée.

**4.** Procédé selon l'une quelconque des revendications 1 à 3, dans lequel le monomère d'oléfine est l'éthylène et/ou le propylène.

**5.** Procédé selon l'une quelconque des revendications 1 à 4, dans lequel

(a) dans l'étape (c), la température à l'intérieur de la cuve est maintenue égale ou inférieure à 70°C et/ou la pression à l'intérieur de la cuve est de 1 à 15 bar,
et
(b) éventuellement, dans l'étape (d), la terminaison de la polymérisation est réalisée par dégazage de la cuve.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03051934 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 9613529 A
- WO 0170395 A
- WO 9710248 A
- WO 9941290 A
- WO 9910353 A
- WO 02060963 A
- WO 9428034 A


### Non-patent literature cited in the description


- **V. C. GIBSON et al.** *Angew. Chem. Int. Ed., engl.,* 1999, vol. 38, 428-447
- **V. C. GIBSON.** *Angew. Chem. Int. Ed., engl.,* 1999, vol. 38, 428-447